# EUROPEAN PATENT APPLICATION

(11) **EP 4 654 630 A1**
(43) Date of publication of application: **26.11.2025**
(21) Application number: 24749506.2
(22) Date of filing: 09.01.2024
(51) Int. Cl.: H04W 4/80

(54) **TAG DEACTIVATION METHOD AND APPARATUS**

(30) Priority: 31.01.2023 CN 202310145354
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: Isarpatent
(86) International application number: PCT/CN2024/071394
(87) International publication number: WO 2024/160024

(57) **Abstract**

This application relates to the field of communication technologies, and discloses a tag deactivation method and an apparatus, so that signaling overheads of tag deactivation can be reduced. The method includes: A core network device receives a first request from a service requester, where the first request is used to request to perform a non-deactivation operation on a second tag. The core network device determines that there is a first tag on which a deactivation operation is to be performed, where the deactivation operation is used to deactivate the first tag. The core network device sends random access indication information to an access network device, where the random access indication information includes a first tag identifier range, the random access indication information indicates the access network device to trigger random access of a tag within the first tag identifier range, and the first tag identifier range includes a tag identifier of the first tag and a tag identifier of the second tag. The core network device sends a deactivation instruction to the first tag after random access of the first tag.

## Description

### CROSS-REFERENCE TO RELATED APPLICATIONS

This application claims priority to Chinese Patent Application No. 202310145354.4, filed with the China National Intellectual Property Administration on January 31, 2023 and entitled "TAG DEACTIVATION METHOD AND APPARATUS", which is incorporated herein by reference in its entirety.

### TECHNICAL FIELD

Embodiments of this application relate to the field of communication technologies, and in particular, to a tag deactivation method and an apparatus.

### BACKGROUND

Internet of things (internet of things, IoT) constructed based on a radio frequency identification (radio frequency identification, RFID) technology is generally deployed only in an enterprise. Different from this, in passive internet of things (passive IoT, P-IoT, or referred to as an environmental sensing internet of things (ambient IoT, A-IoT)), an internet of things technology can be combined with a wireless communication system, for example, a 5^{th} generation (5^{th} generation, 5G) mobile communication system, so that the internet of things has prospects for wider application and deployment.

However, in the P-IoT, a core network device, an access network device, or the like needs to carry both communication services such as 5G and operation services of tags, and there are usually a large quantity of tags. If a deactivation upon sending mechanism similar to that used in the RFID is used, to be specific, a tag corresponding to a deactivation operation is immediately deactivated, a large quantity of resources including the core network device, the access network device, or the like are consumed to page the tags. Consequently, signaling overheads are large, and a normal communication service may be affected.

### SUMMARY

Embodiments of this application provide a tag deactivation method and an apparatus, so that signaling overheads of tag deactivation can be reduced.

According to a first aspect, an embodiment of this application provides a tag deactivation method. The method may be performed by a core network device, may be performed by a component (for example, a processor, a chip, or a chip system) of a core network device, or may be implemented by a logical module or software that can implement all or some functions of a core network device. An example in which the core network device performs the method is used. The method includes: The core network device receives a first request from a service requester, where the first request is used to request to perform a non-deactivation operation on a second tag. The core network device determines that there is a first tag on which a deactivation operation is to be performed, where the deactivation operation is used to deactivate the first tag. The core network device sends random access indication information to an access network device, where the random access indication information includes a first tag identifier range, the random access indication information indicates the access network device to trigger random access of a tag within the first tag identifier range, and the first tag identifier range includes a tag identifier of the first tag and a tag identifier of the second tag. The core network device sends a deactivation instruction to the first tag after random access of the first tag.

According to the foregoing method, a deactivation operation may be performed together in a procedure of performing another operation on a tag, to avoid a separate random access procedure for searching for the tag corresponding to the deactivation operation, so that signaling overheads of tag deactivation can be reduced, and impact of tag deactivation on other communication services of the core network device and an access network device can be avoided.

In a possible design, the method further includes: The core network device receives a second request from a data management function network element, where the second request is used to request to perform a deactivation operation on the first tag, and the second request is sent by the data management function network element after a life cycle of the first tag ends; or the core network device receives a second request from the service requester, where the second request is used to request to perform a deactivation operation on the first tag; and the core network device stores the first tag on which a deactivation operation is to be performed. Optionally, that the life cycle of the first tag ends includes: setting a validity timer corresponding to the first tag to zero or exceeding a validity time threshold, or setting an operation counter corresponding to the first tag to zero or exceeding a count threshold.

In the foregoing design, the core network device may store a first tag on which a deactivation operation is to be performed and that is from the data management function network element (for example, unified data management (unified data management, UDM)) or the service requester, and wait for a non-deactivation operation procedure for another tag (for example, the second tag). This avoids a separate random access procedure for searching for the tag corresponding to the deactivation operation, so that signaling overheads of tag deactivation can be reduced. In addition, in a solution in which the data management function network element may trigger a tag deactivation operation when a life cycle of the tag ends, a requirement of an operator of a wireless communication system for tag deactivation operation in a scenario in which an internet of things technology is combined with the wireless communication system can be adapted. This conforms to a business model in which the internet of things technology is combined with the operator, and improves scenario applicability of tag deactivation.

In a possible design, the method further includes: The core network device receives a third request from the service requester, where the third request is used to request to perform a non-deactivation operation on the first tag; and the core network device sends life cycle trigger information to the data management function network element when the core network device determines that no operation is performed on the first tag; or the core network device sends life cycle trigger information to the data management function network element when the third request further carries subscription indication information indicating that the first tag is initially enabled, where the life cycle trigger information includes the tag identifier that is of the first tag, to indicate the data management function network element to start the life cycle of the first tag. Optionally, starting the life cycle of the first tag includes starting the validity timer corresponding to the first tag and/or starting the operation counter corresponding to the first tag.

In the foregoing design, the data management function network element may be notified, by using a subscription operation or an initial operation of the tag, to start the life cycle of the tag, so that the operator of the wireless communication system can be supported to start the life cycle of the tag. This conforms to an operation requirement of the operator for the tag in internet of things technology and wireless communication system scenarios.

In a possible design, when starting the life cycle of the first tag includes starting the operation counter corresponding to the first tag, the method further includes: The core network device sends operation counter update indication information to the data management function network element after performing any non-deactivation operation on the first tag, where the operation counter update indication information includes the tag identifier of the first tag, to indicate to reduce or increase a value of the operation counter corresponding to the first tag by 1.

In the foregoing design, after a non-deactivation operation is performed on the tag, the operation counter corresponding to the tag is updated. This helps the core network device deactivate the tag in time, so that a problem that extra charging is generated due to untimely deactivation on the tag is avoided.

In a possible design, the method further includes: The core network device determines, when it is detected that a behavior exception occurs on the first tag, that a deactivation operation is to be performed on the first tag; and the core network device stores the first tag on which a deactivation operation is to be performed. Optionally, the behavior exception includes at least one of an access location exception and an access response exception.

In the foregoing design, a new tag deactivation triggering manner is provided. To be specific, the tag is deactivated when the behavior exception occurs on the tag. This expands an application scenario of tag deactivation. In addition, the core network device may store the determined first tag on which a deactivation operation is to be performed, and wait for a non-deactivation operation procedure for another tag (for example, the second tag). This avoids a separate random access procedure for searching for the tag corresponding to the deactivation operation, so that signaling overheads of tag deactivation can be reduced.

According to a second aspect, an embodiment of this application provides a communication apparatus. The apparatus has a function of implementing the method in the first aspect. The function may be implemented by using hardware, or may be implemented by using hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to the first aspect.

In a possible design, the apparatus may be a core network device.

According to a third aspect, an embodiment of this application provides a communication apparatus. The communication apparatus includes an interface circuit and a processor, and the processor and the interface circuit are coupled to each other. The processor is configured to implement the method in the first aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver machine, a transceiver, or an input/output interface.

Optionally, the communication apparatus may further include a memory that is configured to: store the instructions executed by the processor, store input data required by the processor to run the instructions, or store data generated after the processor runs the instructions. The memory may be a physically independent unit, or may be coupled to the processor, or the processor includes the memory.

According to a fourth aspect, an embodiment of this application provides a computer-readable storage medium. The storage medium stores a computer program or instructions. When the computer program or the instructions are executed by a processor, the method according to the first aspect can be implemented.

According to a fifth aspect, an embodiment of this application further provides a computer program product, including a computer program or instructions. When the computer program or the instructions are executed by a processor, the method according to the first aspect can be implemented.

According to a sixth aspect, an embodiment of this application further provides a chip system. The chip system includes a processor and a memory. The processor is coupled to the memory. The memory is configured to store a program or instructions. When the program or the instructions are executed by the processor, the method according to the first aspect can be implemented.

For technical effects that can be achieved in the second aspect to the sixth aspect, refer to the technical effects that can be achieved in the first aspect. Details are not described herein again.

### BRIEF DESCRIPTION OF DRAWINGS

FIG. 1A and FIG. 1B are diagrams of network architectures according to an embodiment of this application;
FIG. 2 is a diagram of an architecture of an RFID system according to an embodiment of this application;
FIG. 3 is a diagram of a passive internet of things service according to an embodiment of this application;
FIG. 4A and FIG. 4B are schematic flowcharts of a tag inventory taking operation and a tag read/write operation according to an embodiment of this application;
FIG. 5 is a diagram 1 of a tag deactivation method according to an embodiment of this application;
FIG. 6 is a diagram 1 of determining a to-be-deactivated tag according to an embodiment of this application;
FIG. 7 is a diagram 2 of determining a to-be-deactivated tag according to an embodiment of this application;
FIG. 8 is a schematic flowchart of starting a life cycle of a tag according to an embodiment of this application;
FIG. 9 is a schematic flowchart of updating a value of an operation counter corresponding to a tag according to an embodiment of this application;
FIG. 10 is a schematic flowchart of maintaining an operation counter corresponding to a tag by a core network device according to an embodiment of this application;
FIG. 11 is a diagram 2 of a tag deactivation method according to an embodiment of this application;
FIG. 12 is a diagram 1 of a structure of a communication apparatus according to an embodiment of this application; and
FIG. 13 is a diagram 2 of a structure of a communication apparatus according to an embodiment of this application.

### DESCRIPTION OF EMBODIMENTS

The technical solutions in embodiments of this application may be applied to various communication systems, for example, a 5G communication system and a communication system evolved after 5G, such as a 6^{th} generation (6^{th} generation, 6G) communication system. The following describes some network architectures to which this application is applicable. In the following description, an example in which a terminal device is user equipment (user equipment, UE) is used.

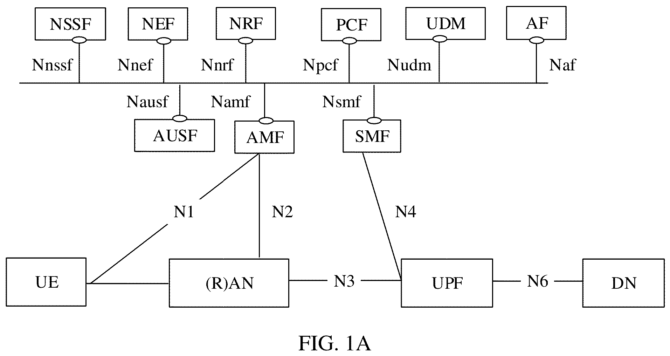

FIG. 1A is a diagram of a network architecture based on a service-based architecture in a 5G communication system. The network architecture shown in FIG. 1A includes a data network (data network, DN) and an operator network. The following briefly describes functions of some network elements in the network architecture.

The operator network includes one or more of the following network elements: a network slice selection function (network slice selection function, NSSF) network element, a network capability exposure function (network exposure function, NEF) network element, a network repository function (network repository function, NRF) network element, a policy control function (policy control function, PCF) network element, a unified data management (unified data management, UDM) network element, an application function (application function, AF) network element, an authentication server function (authentication server function, AUSF) network element, an access and mobility management function (access and mobility management function, AMF) network element, a session management function (session management function, SMF) network element, an access network (access network, AN) device (a radio access network (radio access network, RAN) device is used as an example in the figure), a user plane function (user plane function, UPF) network element, and the like. In the operator network, a network element or device other than the access network device may be referred to as a core network element or a core network device.

Terminal device: The terminal device and an access network device communicate with each other by using a specific air interface technology. The air interface may be a wireless air interface based on a 5G standard. For example, the air interface is new radio (new radio, NR). Alternatively, the air interface may be an air interface based on a 5G next-generation mobile communication network technology standard, or the air interface may be an air interface based on a 4G standard (for example, a long term evolution (long term evolution, LTE) system). The terminal device may be user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network.

Access network device: The access network device is mainly responsible for functions such as radio resource management, quality of service (quality of service, QoS) management, and data compression and encryption on an air interface side. The access network device may be a base station (base station), a pole site, an integrated access and backhaul (integrated access and backhaul, IAB) node, a NodeB (NodeB), a mobile base station, an evolved NodeB (evolved NodeB, base station), a transmission reception point (transmission reception point, TRP), a radio access network, a radio access network device, an evolved NodeB (evolved NodeB, eNodeB) in an LTE system or an LTE-advanced (LTE-Advanced, LTE-A) system, a next generation NodeB (next generation NodeB, gNB) in a 5G mobile communication system, a NodeB in a future mobile communication system, or the like, or may be a module or unit that implements some functions of the base station, for example, may be a central unit (central unit, CU), or may be a distributed unit (distributed unit, DU). The radio access network device may be a macro base station, may be a micro base station (also referred to as a small cell) or an indoor base station, or may be a relay node, a donor node, or the like. A specific technology and a specific device form used by the access network device are not limited in embodiments of this application.

In addition, the access network device may alternatively be an untrusted non-3^{rd} generation partnership project (3rd generation partnership project, 3GPP) access network (untrusted non-3GPP access network) device. The untrusted non-3GPP access network device may allow a terminal device to interconnect with a 3GPP core network by using a non-3GPP technology. The non-3GPP technology includes, for example, wireless fidelity (wireless fidelity, Wi-Fi), worldwide interoperability for microwave access (worldwide interoperability for microwave access, WiMAX), and a code division multiple access (code division multiple access, CDMA) network, and may directly access the 3GPP core network compared with a trusted non-3GPP access network device. The network element needs to interconnect with a 3GPP core network through a security tunnel set up by a security gateway. The security gateway is, for example, an evolved packet data gateway (evolved packet data gateway, ePDG) or a non-3GPP interworking function (non-3GPP interworking function, N3IWF) network element.

AMF network element: The AMF network element is a core network element, and is mainly responsible for signaling processing, for example, functions such as access control, mobility management, attachment and detachment, and gateway selection. When serving a session in a terminal device, the AMF network element may provide a control-plane storage resource for the session, and store a session identifier, an SMF network element identifier associated with the session identifier, and the like.

SMF network element: The SMF network element is responsible for user plane network element selection, user plane network element redirection, internet protocol (internet protocol, IP) address assignment, bearer setup, modification, and release, and QoS control.

UPF network element: The UPF network element is responsible for forwarding and receiving user data in a terminal device. The UPF network element may receive user data from a data network, and transmit the user data to the terminal device through an access network device. The UPF network element may further receive user data from the terminal device through the access network device, and forward the user data to the data network. Transmission resources and scheduling functions that are used by the UPF network element to provide services for the terminal device are managed and controlled by the SMF network element.

PCF network element: The PCF network element mainly supports provision of a unified policy framework to control a network behavior and provision of a policy rule for a control layer network function, and is responsible for obtaining policy-related subscription information of a subscriber.

AUSF network element: The AUSF network element mainly provides an authentication function, and supports authentication of 3GPP access and non-3GPP access.

NEF network element: The NEF network element mainly supports secure interaction between a 3GPP network and a third-party application. The NEF network element can securely expose a network capability and an event to a third party, to enhance or improve application service quality. The 3GPP network can also securely obtain related data from the third party, to enhance intelligent decision-making of the network. In addition, the network element supports restoring structured data from a unified data repository or storing structured data in the unified data repository.

UDM network element: Main functions of the UDM network element include: supporting authentication credential processing, user identity processing, access authorization, registration and mobility management, subscription management, short message service management, and the like in a 3GPP authentication and key agreement mechanism.

UDR network element: The UDR network element is mainly responsible for storing structured data. Stored content includes subscription data and policy data, externally exposed structured data, and application-related data.

NRF network element: Main functions of the NRF network element include: a service discovery function, maintaining an available network function (network function, NF) text of an NF instance and a supported service thereof, and the like.

NSSF network element: Main functions of the NSSF network element include: selecting a group of network slice instances for a terminal device, determining allowed NSSAI, determining an AMF network element set that can serve the terminal device, and the like.

AF network element: The AF network element mainly supports interacting with a 3GPP core network to provide a service, for example, affecting a data routing decision and a policy control function, or providing some third-party services for a network side.

The 5G communication system may further include a tag management function (tag management function, TMF) network element (not shown in FIG. 1A). The TMF network element may be responsible for functions such as access control and mobility management of a tag. The TMF network element may be an independent network element, may be integrated with the AMF network element, or may be integrated with the RAN. This is not limited in this application.

Nnssf, Nnef, Nnrf, Npcf, Nudm, Naf, Nausf, Namf and Nsmf in FIG. 1A are respectively service-based interfaces provided by the NSSF network element, the NEF network element, the NRF network element, the PCF network element, the UDM network element, the AF network element, the AUSF network element, the AMF network element, and the SMF network element, and are configured to invoke corresponding service-based operations. N1, N2, N3, N4, and N6 are interface sequence numbers, and are respectively used for an interface between the AMF network element and the UE, an interface between the AMF network element and the radio access network device, an interface between the radio access network device and the UPF network element, an interface between the SMF network element and the UPF network element, and an interface between the UPF network element and the DN.

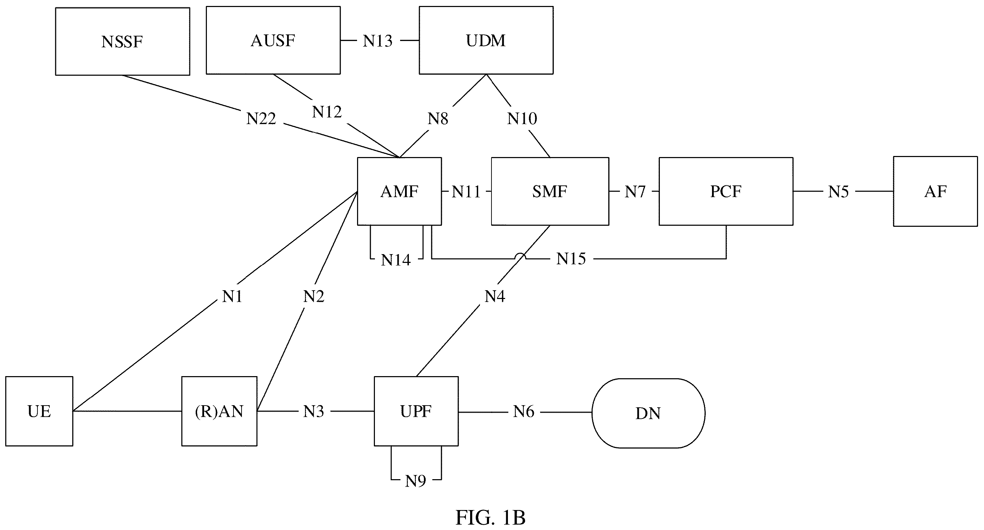

FIG. 1B is a diagram of a network architecture of a 5G communication system based on a point-to-point interface. For descriptions of functions of network elements, refer to the descriptions of the functions of the corresponding network elements in FIG. 1A. Details are not described again. A main difference between FIG. 1B and FIG. 1A lies in that each interface between the control plane network elements in FIG. 1A is a service-based interface, and an interface between control plane network elements in FIG. 1B is a point-to-point interface. For example, N5 is an interface between the AF network element and the PCF network element, and N7 is an interface between the PCF network element and the SMF network element. For meanings of the interface sequence numbers such as N1 and N2, refer to meanings defined in a 3GPP standard protocol. Details are not described herein again.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

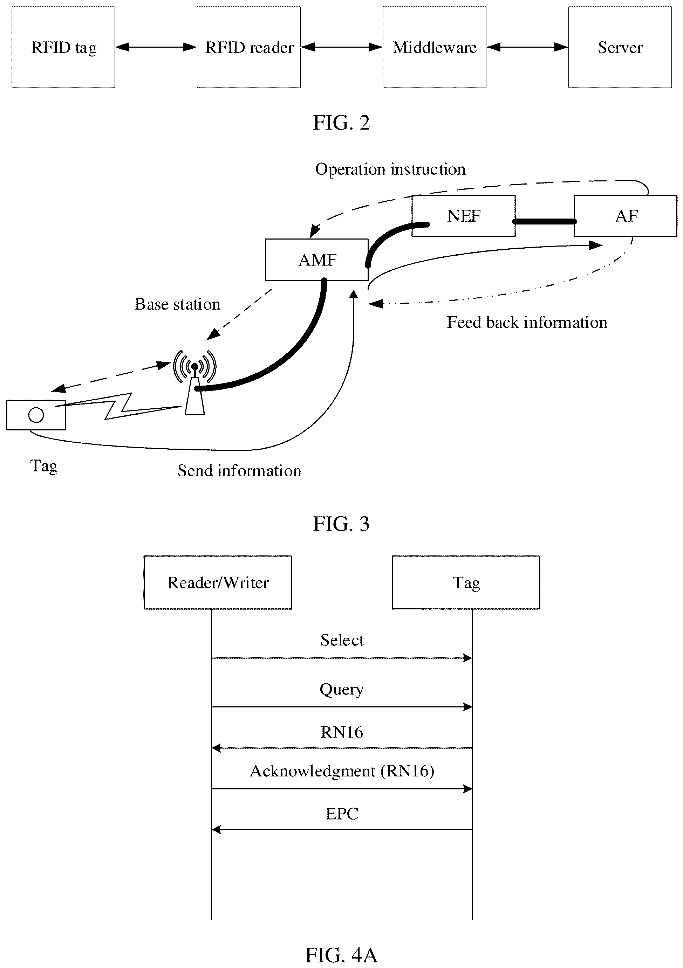

Before embodiments of this application are described, some terms used in this application are first explained and described, to facilitate understanding for a person skilled in the art.
(1) RFID: The RFID is a type of automatic identification technology. FIG. 2 is a diagram of an architecture of an RFID system. The RFID system includes four components (or logical functions): an RFID tag, an RFID reader, middleware, and a server (which may also be referred to as an application level event (application level event, ALE) client). A Gen 2 air interface (gen 2 air interface) protocol may be used between an FID tag (for example, a Gen 2 RFID tag (gen 2 RFID tag)) and the RFID reader. A low level reader protocol (low level reader protocol, LLRP) is used between the RFID reader and the middleware (for example, a filtering and collection (filtering & collection) component). An application layer event (application level event, ALE) protocol is used between the middleware and the server. The RFID reader (reader) may perform inventory, reading, and writing on an RFID terminal device (also referred to as the RFID tag (tag)), to identify a target and exchange data. An RFID access technology has two working modes. One is that when the RFID tag enters an effective identification range of the RFID reader, the RFID tag receives a radio frequency signal sent by the RFID reader, and sends, by using energy obtained from an induced current, information stored in the RFID tag (which corresponds to a passive RFID tag); and the other is that the RFID tag actively sends a radio frequency signal of a specific frequency (which corresponds to an active RFID tag), and the RFID reader receives and decodes the radio frequency signal, and then sends a decoded signal to the middleware or the server for processing.
(2) Passive internet of things (passive IoT, P-IoT, or referred to as environmental sensing internet of things (ambient IoT, A-IoT)): To be specific, some network nodes may be passive, and obtain energy through solar energy, radio frequency, wind energy, water energy, tidal energy, or the like. A manner of obtaining the energy is not specifically limited herein in this application. These network nodes may be not equipped with or not depend on power supply devices such as batteries, but obtain energy from an environment, to support data sensing, transmission, and distributed computing. The network nodes may further store the obtained energy. A passive internet of things architecture may include a terminal device, a reader (reader, or may be referred to as a reader/writer), and a server. The terminal device may be in a form of tag, or may be in any other form of terminal device. This is not limited. The terminal device may be passive, semi-passive, semi-active, or active. The terminal device may not have an energy storage capability (for example, excluding a capacitor), or may have an energy storage capability (for example, equipped with a capacitor to store electric energy). The reader may be an access network device, for example, a base station, a pole site, a micro base station, a macro base station, an IAB node, or a mobile base station. Alternatively, the reader may be a terminal device, for example, a mobile phone, an IoT device, or a handheld reader/writer. Herein, an example in which the terminal device is a tag is used for description, but the terminal device is not limited to the tag. The reader (reader) performs non-contact bidirectional data communication in a wireless radio frequency manner, and reads or writes an electronic tag (Tag) or a radio frequency card in the wireless radio frequency manner, to identify a target and exchange data. One is that when entering an effective identification range of the reader, the tag receives a radio frequency signal sent by the reader, and sends, by using energy obtained from an induced current, information stored in a chip (which corresponds to a passive tag); and the other is that the tag may store a part of electric energy through solar energy or the like, so that the tag can actively send a signal of a specific frequency (This may also be referred to as a semi-passive or semi-active tag). The reader receives and decodes information, and sends decoded information to a central information system for related data processing.

FIG. 3 is a diagram of a passive internet of things service. In FIG. 3, an example in which the reader is a base station (a pole site or a macro base station) is used for description. However, a device form of the reader is not limited in this application.

When performing an operation on the tag, the server may send an operation instruction to a core network (for example, an AMF network element or a TMF network element). The operation instruction may include an inventory taking operation (or referred to as an inventory operation) (which may also be understood as obtaining identification information of the tag, as each tag has an identifier thereof. The identifier of the tag may be allocated by an enterprise (that is, written into the tag when the enterprise prints the tag), or may be allocated by an operator. In a possible implementation, the identifier of the tag may be a globally unique code, for example, an electronic product code (electronic product code, EPC), or may be a temporary identifier or a non-globally unique identifier. In an inventory taking procedure, the server may deliver an inventory taking instruction. Generally, the inventory taking instruction may include information such as a tag identifier range, an identifier of the reader, and location information. After receiving the inventory taking instruction, the reader may perform inventory taking on the tag according to the inventory taking instruction, and send the identification information of the tag to the server. Alternatively, the server sends an instruction, and the reader forwards the instruction to the tag. The tag learns, based on content of the instruction, that an operation is the inventory taking operation. The tag sends the identification information of the tag to the reader, and the reader sends the identification information of the tag to the server. Alternatively, the tag sends the identification information of the tag to the core network through the reader, and the core network sends the identification information of the tag to the server). The operation instruction may include a read operation (to be specific, perform data reading on the tag. The tag may have a storage function, and a storage area of the tag can store data. If the server is required to perform a read operation on the tag, the server may send a read instruction, and the reader or the core network performs a read operation on the tag according to the instruction, reads the data from the storage area of the tag, and sends the data to the server). The operation instruction may include a write operation (to be specific, perform data writing on the tag. The server may send a write instruction, and the reader or the core network performs a write operation on the tag according to the instruction, to write data into the storage area of the tag). The operation instruction may include a deactivation operation (to be specific, invalidate or deactivate the tag. The server may send a deactivation instruction, where the deactivation instruction may include a tag identifier (to be specific, an identifier of a tag that is expected to be deactivated or invalidated). The reader or the core network performs an invalidation operation on the tag according to the instruction. After the operation is completed, the tag is invalidated or deactivated, and inventory taking or another operation cannot be performed on the tag again). The operation instruction may include tag information obtaining (which may be understood as a higher-level description of the foregoing operations (for example, a higher-level description of the inventory taking operation and the read operation), without distinguishing whether the server performs an inventory taking operation on the tag or reads tag data. In the operation, the tag information is obtained, where the tag information may be the identification information of the tag or information stored in the storage area of the tag). The operation instruction may include an operation of exchanging information with the tag (which may be understood as a higher-level description of the foregoing operations. After receiving an instruction sent by the server, the reader performs information or message exchange with the tag, and sends information from the tag to the server. This operation is mainly for a case in which the reader does not view content of the instruction, and is only responsible for forwarding a message sent by the server to the tag and a message sent by the tag to the server. Therefore, in this scenario, the operation performed by the reader on the tag may be understood as an operation of performing message exchange with the tag). The instruction may include area location information, the identification information of the tag, and the like. The base station sends an access instruction to the tag. After random access of the tag succeeds, the base station may send an instruction to the tag (the base station may forward, to the tag, an instruction sent by the core network). The tag obtains or sends the corresponding information according to the instruction. For example, when the instruction is the inventory taking instruction or an instruction indicating to perform an inventory taking operation, the tag may send the identification information of the tag. When the instruction is the read instruction or an instruction indicating to perform a read operation, the tag may send data information stored in the storage area of the tag. When the instruction is the write instruction or an instruction indicating to perform a write operation, the tag may store, in the storage area of the tag, data information that is to be written into the tag and that is included in the instruction. The base station sends (or forwards), to the core network, the information sent by the tag, and the core network sends the information to the server. The core network performs an access management operation on the tag based on feedback information of the server. In addition, it should be understood that the identification information of the tag may also be referred to as a tag identifier of the tag. This is not described in the following descriptions of this application.

The server may send an instruction through a control plane channel. As shown in FIG. 3, the server sends the instruction to the AMF network element. In this case, the server may be the AF network element, an application server (application server, AS), or a passive internet of things application function (P-IoT AF). In a possible implementation, the P-IoT AF sends the instruction to the AMF network element. In another possible implementation, the P-IoT AF sends the instruction to the AMF network element through the control plane device. The control plane device may be an NEF network element, an SMF network element, a PCF network element, a UDM network element, a network slice-specific and standalone non-public network (standalone non-public network, SNPN) authentication and authorization function (network slice-specific and SNPN authentication and authorization function, NSSAAF) network element, or the like. In addition, the server may further send an instruction to the reader through a user plane channel. In a possible implementation, the server sends the instruction to the base station by using a UPF network element. In a possible implementation, the server sends the instruction to the AMF network element by using the UPF network element and the SMF network element, and the AMF network element sends the instruction to the tag by using a RAN device (for example, the base station). In another possible implementation, the server sends the instruction to the reader by using a user plane device and the access network device, for example, a RAN device (when the reader is a terminal).

(3) Tag operation process: For a tag inventory taking procedure, in the inventory taking procedure, a tag needs to perform random access (Step 1 to Step 4) in FIG. 4A, and send an EPC code to a reader/writer after the random access succeeds, so that the reader/writer can learn which tags are within coverage of the reader/writer. The information may be finally reported by the reader/writer to middleware and a server. A read/write procedure is roughly as follows:
Step 1: The reader/writer receives an inventory taking command delivered by the server (the inventory taking command may be delivered by the server to the middleware, and then delivered by the middleware to the reader/writer), generates a Select (Select) command, where the command carries a tag range (for example, EPC codes of some specific ranges), and delivers the Select command. After the Select command is monitored, the tag determines whether the tag belongs to the tag range that needs to be determined in the Select command. If the tag belongs to the tag range, the tag may subsequently feed back information after a Query (Query) command is monitored. If the tag does not belong to the tag range, no action is performed subsequently.
Step 2: The reader/writer sends the Query command. The Query command may include a value (denoted as a Q value). The tag may generate a random number based on the Q value, for example, generate a random number from 0 to 2 to a power of Q. Then, the tag may subtract 1 from the random number after the reader/writer sends a Query instruction for each time. When the random number is decreased to zero, the tag may initiate random access.
Step 3: When the tag finds that the tag belongs to the tag range selected in the Select command, the tag may feed back a random number RN16 (which may be understood as a random number with a length of 16 bits) to the reader/writer in a contention manner. For example, when the random number is decreased to zero in Step 2, the random number RN16 is fed back to the reader/writer in a contention manner.
Step 4: After receiving the random number sent by the tag, the reader/writer may send an acknowledgment (ACK) command, where the command includes the received random number (RN16).
Step 5: After receiving the ACK command sent by the reader and verifying that the random number is correct, the tag may feed back the EPC code of the tag to the reader/writer, to complete the inventory taking procedure.

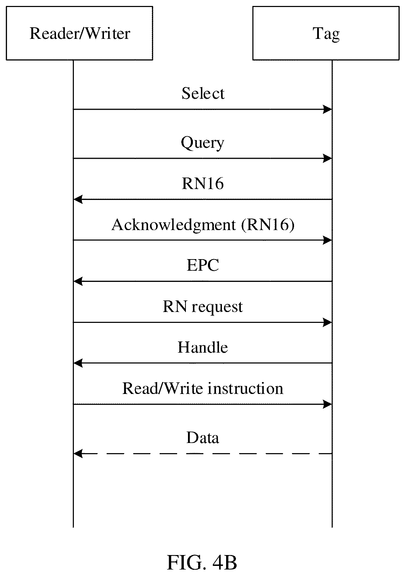

For a tag read/write procedure, in the read/write procedure, the reader/writer may set the tag range in the Select command as a tag range that needs to be read/written (for example, if the range in the Select command is a specific EPC code, the reader/writer may perform a read/write operation on a tag corresponding to the EPC code). Step 1 to Step 5 in FIG. 4B are the inventory taking procedure, but the inventory taking procedure is not an inventory taking procedure of a group tag, but inventory taking performed on a specific tag. A procedure from Step 6 is the read/write procedure, which is roughly as follows:
Step 6: The reader/writer sends an RN request (Req_RN) command to the tag, where the command carries the previously received random number RN16.
Step 7: If the tag verifies that the random number is correct, the tag sends a handle to the reader/writer. The handle needs to be carried in s subsequent read/write procedure.
Step 8: The reader/writer sends a read or write command (or instruction) to the tag, where the command needs to carry the handle. If the command is a write instruction, data to be written into a storage area of the tag further needs to be carried.
Step 9: If the command in step 8 is a read instruction, the tag needs to feed back data that is in the storage area of the tag, and further needs to carry the handle.

It should be noted that a deactivation procedure of the tag is similar to this. In Step 8, the tag performs deactivation after receiving a deactivation instruction, and then optionally feeds back the handle in Step 9.

Although both internet of things constructed based on RFID and P-IoT can implement operations such as inventory on a tag, in comparison with FRID, in the P-IoT, an internet of things technology can be combined with a wireless communication system, so that the internet of things has wider coverage and has prospects for wider application and deployment. However, in the P-IoT, a core network device, an access network device, or the like needs to carry both communication services such as 5G and operation services of tags, and there are usually a large quantity of tags. If a deactivation upon sending mechanism similar to that used in the RFID is used, to be specific, a tag corresponding to a deactivation operation is immediately deactivated, a large quantity of resources including the core network device, the access network device, or the like are consumed to page the tags. Consequently, signaling overheads are large, and a normal communication service is affected.

In view of this, embodiments of this application provide a tag deactivation method and an apparatus, to reduce signaling overheads of tag deactivation and avoid impact of tag deactivation on the communication service.

In addition, it should be understood that ordinal numbers such as "first" and "second" mentioned in embodiments of this application are used to distinguish between a plurality of objects, and are not used to limit sizes, content, a sequence, a time sequence, priorities, importance degrees, or the like of the plurality of objects. For example, a first tag and a second tag do not indicate different priorities, importance degrees, or the like corresponding to the two tags.

The following describes embodiments of this application in detail with reference to the accompanying drawings by using an example in which the access network device is a RAN device, the core network device is an AMF network element in 5G, and the data management function network element is a UDR/UDM network element in 5G. It should be understood that the core network device may alternatively be a TMF network element, an NEF network element, another core network element, or the like in 5G. Alternatively, the core network device and the data management function network element may be an AMF/TMF/NEF network element and a UDR/UDM network element in a future communication system (for example, a 6G communication system), or may be another network element that has functions of the AMF/TMF/NEF network element and the UDR/UDM network element in the future communication system.

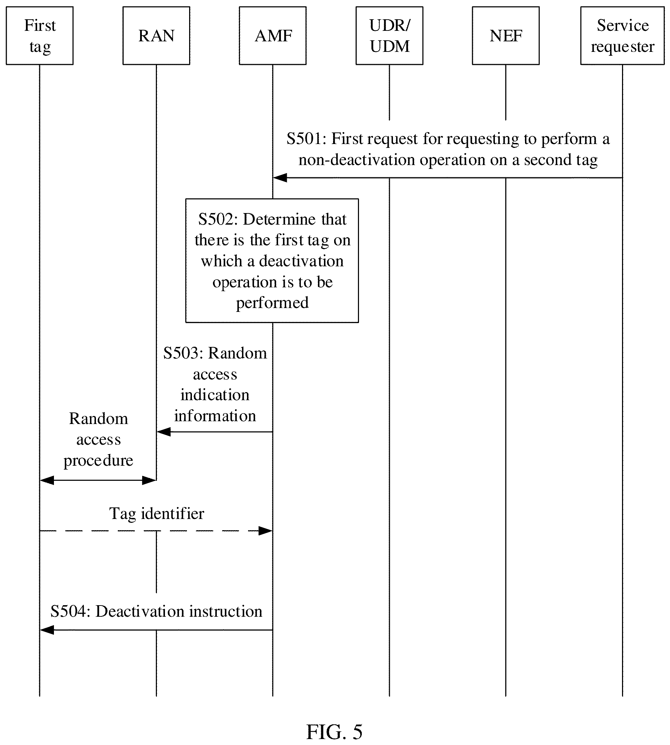

FIG. 5 is a diagram of a tag deactivation method according to an embodiment of this application. The method includes the following steps.

S501: An AMF network element receives a first request from a service requester, where the first request is used to request to perform a non-deactivation operation on a second tag.

S502: The AMF network element determines that there is a first tag on which a deactivation operation is to be performed, where the deactivation operation is used to deactivate the first tag.

In this embodiment of this application, the tag may be a passive, semi-passive, semi-active, or active P-IoT tag (Tag). When receiving the first request for performing a non-deactivation operation (such as a read, write, or inventory operation) on the second tag, the AMF network element may query whether there is the first tag corresponding to the deactivation operation, and perform random access on the first tag and the second tag together, to reduce signaling overheads. In other words, after the AMF network element receives a request for performing a deactivation operation on the first tag, if there is no second tag on which a non-deactivation operation needs to be performed, the AMF network element may temporarily store/record information indicating that a deactivation operation is to be performed on the first tag, wait for the first request for performing a non-deactivation operation on the second tag, and after receiving the first request for performing a non-deactivation operation on the second tag, perform random access on the first tag and the second tag together, to reduce the signaling overheads.

The AMF network element may determine, based on information from the service requester (for example, an AF network element or an AS to which a tag belongs), a UDR/UDM network element, or the like, (one or more) first tags corresponding to the deactivation operation. Alternatively, when it is detected that a behavior exception, for example, an access location exception, an access response exception, or another abnormal behavior, occurs on the tag, the AMF network element may determine that the first tag is to be deactivated, which corresponds to the deactivation operation. The following provides descriptions with reference to different determining manners.

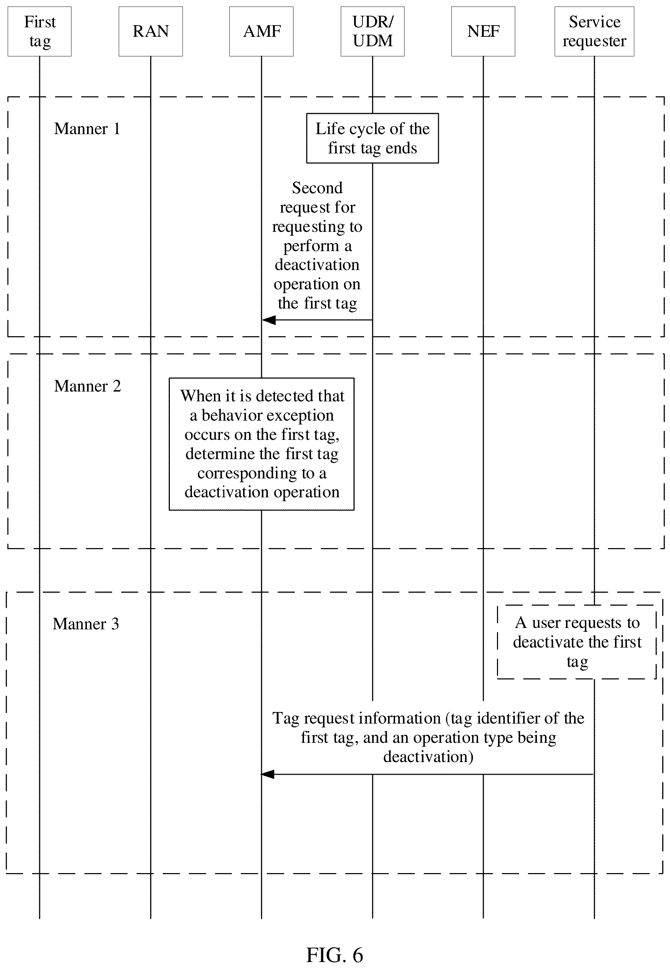

Manner 1: Refer to Manner 1 in a diagram of determining a to-be-deactivated tag shown in FIG. 6. A life cycle of a tag may be maintained in the UDR/UDM network element. The life cycle of the tag may be a count threshold (which may also be referred to as a threshold of a quantity of operation times) at which a non-deactivation operation such as inventory can be performed on the tag, or may be a validity time threshold at which the tag can keep alive from activation (or enabling) to deactivation. After a life cycle of the first tag ends (for example, an operation counter of the first tag starts from zero to exceeding a count threshold, or a validity timer starts from zero to exceeding a validity time threshold), the UDR/UDM network element may send, to the AMF network element, a second request for requesting to perform a deactivation operation on the first tag. For example, after the life cycle of the first tag ends, the UDR/UDM network element may send, to the AMF network element, the second request that carries identification information of the first tag and whose operation type is a deactivation operation, to request to perform a deactivation operation on the first tag. After receiving the second request from the UDR/UDM network element, the AMF network element may determine that a deactivation operation is to be performed on the first tag, and store/record the information indicating that the first tag is to be deactivated. For example, the information may be stored in a context of the first tag.

In a possible implementation, the life cycle of the tag may be obtained by the UDR/UDM network element from subscription information of the tag. Tag information of the tag may include information such as a tag identifier, a tag type, and the life cycle that are of the tag, and an identifier of a service requester to which the tag belongs (for example, an identifier of an AF network element or an AS to which the tag belongs). The subscription information of the tag may be stored in the UDR/UDM network element by an operator after the tag is subscribed, or may be provided by the service requester or the AMF network element to the UDR/UDM network element or obtained by the UDR/UDM network element from the service requester or the AMF network element. This is not limited in this application.

Manner 2: Refer to Manner 2 in a diagram of determining a to-be-deactivated tag shown in FIG. 6. When it is detected, during operation on the first tag, that a behavior exception occurs on the first tag, the AMF network element may alternatively determine that a deactivation operation is to be performed on the first tag, and store/record the information indicating that the first tag is to be deactivated. For example, the information may be stored in a context of the first tag. In an example, when performing a read operation on a tag 1 whose tag identifier is 0001, the AMF network element does not receive an operation response from the tag 1 within a response time threshold after sending a read instruction to the tag 1. In this case, the AMF network element determines that a behavior exception occurs on the tag 1, and needs to perform a deactivation operation on the tag 1 whose tag identifier is 0001. In other words, the AMF network element determines that a deactivation operation is to be performed on the tag 1 whose tag identifier is 0001. The AMF network element stores/records information indicating that the tag 1 is to be deactivated.

Alternatively, when it is detected that a RAN device accessed by a tag 1 whose tag identifier is 0001 is not a RAN device in a service area in subscription information of the tag 1, the AMF network element may determine that an access location exception occurs on the tag 1, which may illegally move out of the service area, and needs to perform a deactivation operation on the tag 1 whose tag identifier is 0001. In other words, the AMF network element determines that a deactivation operation is to be performed on the tag 1 whose tag identifier is 0001. In addition, the AMF network element may store/record the information indicating that the tag 1 is to be deactivated.

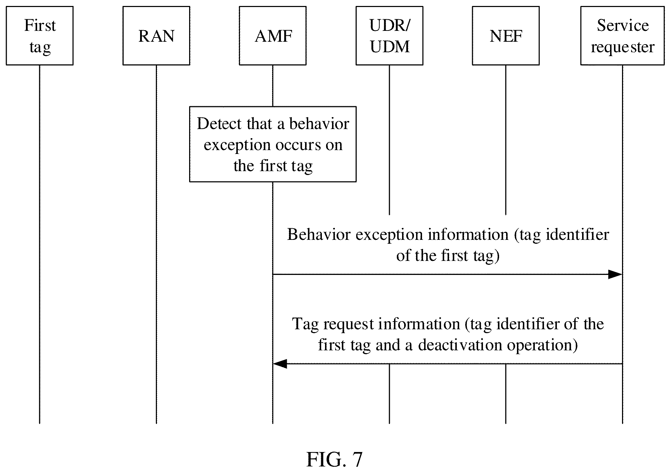

FIG. 7 is another diagram of determining a to-be-deactivated tag according to an embodiment of this application. In some embodiments, after it is detected that a behavior exception occurs on the first tag, the AMF network element may alternatively send behavior exception information including a tag identifier of the first tag to the service requester to which the first tag belongs. The behavior exception information may further include information such as a tag type of the first tag. The service requester determines whether the first tag needs to be deactivated, and after receiving, from the service requester, tag request information including the tag identifier of the first tag and a deactivation operation to be performed on the first tag, determines that a deactivation operation is to be performed on the first tag.

It should be understood that, if there are a plurality of first tags on which a behavior exception occurs, and the plurality of first tags belongs to a same service requester, behavior exception information sent by the AMF network element to the service requester may carry tag identifiers of the plurality of first tags on which the behavior exception occurs; or if the plurality of first tags belong to different service requesters, the AMF network element may send behavior exception information to service requesters to which the plurality of first tags respectively belong, and the service requesters to which the plurality of first tags respectively belong determine whether to perform a deactivation operation on the corresponding first tags respectively.

Manner 3: Refer to Manner 3 in a diagram of determining a to-be-deactivated tag shown in FIG. 6. After receiving a request of a user to actively request to deactivate the first tag, the service requester may send, to the AMF network element by using tag request information sent by an NEF network element to the AMF network element, a second request for requesting to perform a deactivation operation on the first tag. The tag request information may carry a tag identifier and an operation type (for example, deactivation) of the first tag corresponding to the deactivation operation, and may further carry information such as an identifier of the service requester and a tag type. After receiving the tag request information from the service requester, the AMF network element may determine the first tag on which a deactivation operation is to be performed, and store/record the information indicating that the first tag is to deactivated. For example, the information may be stored in a context of the first tag.

It may be understood that the service requester may further send, to the AMF network element by using the tag request information, the second request for requesting to perform a deactivation operation on the first tag and a request for performing an operation on another tag (for example, the first request for requesting to perform a non-deactivation operation on the second tag).

In an example, the tag request information sent by the service requester to the AMF network element may be shown in Table 1, including a tag identifier and an operation type of a tag that needs to be operated, and may further carry information such as the identifier of the service requester and the tag type. As shown in Table 1, the tag request information may include a tag identifier 0001 of a tag 1 that needs to be operated, an operation type being inventory, a tag type being passive, and the identifier of the service requester being 1; a tag identifier 0002 of a tag 2 that needs to be operated, a corresponding operation type being inventory, a tag type being passive, and the identifier of the service requester being 1; a tag identifier 0010 of a tag 10 that needs to be operated, a corresponding operation type being deactivation, a tag type being semi-passive, and the identifier of the service requester being 1; and a tag identifier 0011 of a tag 11 that needs to be operated, a corresponding operation type being read, a tag type being semi-passive, and the identifier of the service requester being 1. After receiving the tag request information shown in Table 1, the AMF network element may determine that the service requester requests to perform a deactivation operation on the tag 10 whose tag identifier is 0010, requests to perform an inventory operation (a non-deactivation operation) on the tag 1 whose tag identifier is 0001 and the tag 2 whose tag identifier is 0002, and requests to perform a read operation (a non-deactivation operation) on the tag 11 whose tag identifier is 0011.

**Table 1**

| Tag identifier (Tag ID) | Operation type | Tag type | Identifier of a service requester |
|---|---|---|---|
| 0001 | Inventory | Passive | 1 |
| 0002 | Inventory | Passive | 1 |
| 0010 | Deactivation | Semi-passive | 1 |
| 0011 | Read | Semi-passive | 1 |

In another example, the tag request information sent by the service requester to the AMF network element may alternatively be shown in Table 2, including an identifier range and an operation type of a tag that needs to be operated, and may further carry information such as the identifier of the service requester and the tag type. As shown in Table 2, the tag request information may include a tag identifier range being less than 0050, an operation type being deactivation, a tag type being passive, and the identifier of the service requester being 1; and a tag identifier range being greater than 0100 and less than 0200, a corresponding operation type being inventory, a tag type being passive, and the identifier of the service requester being 1.

**Table 2**

| Tag identifier (Tag ID) | Operation type | Tag type | Identifier of a service requester |
|---|---|---|---|
| <0050 | Deactivation | Passive | 1 |
| >0100 & <0200 | Inventory | Passive | 1 |

It should be understood that, in a case in which the tag request information includes only a tag identifier range, the AMF network element may select, based on the tag identifier range in the tag request information and a tag range corresponding to the service requester (the service requester may be determined based on the identifier of the service requester in the tag request information), a tag identifier of a tag that needs to be operated. The tag range corresponding to the service requester may be stored in the AMF network element, or may be stored in a network element such as a UDM/UDMR network element, and is obtained by the AMF network element from the network element such as the UDM/UDMR network element. This is not limited in this application.

For example, an identifier range of a tag corresponding to the service requester whose identifier is 1 is 0001-0002 and 0101-0102. In this case, after receiving the tag request information that carries the information shown in Table 2, the AMF network element may determine that the service requester requests to perform a deactivation operation on tags whose tag identifiers are 0001 and 0002 (first tags), and requests to perform an inventory operation in a non-deactivation operation on tags whose tag identifiers are 0101 and 0102 (second tags).

S503: The AMF network element sends random access indication information to a RAN device, where the random access indication information includes a first tag identifier range, the random access indication information indicates the RAN device to trigger random access of a tag within the first tag identifier range, and the first tag identifier range includes the tag identifier of the first tag and a tag identifier of the second tag.

S504: The AMF network element sends a deactivation instruction to the first tag after random access of the first tag.

In this embodiment of this application, the first tag identifier range indicated by the random access indication information sent by the AMF network element to an access network device or the first tag identifier range indicated by mask information in the random access indication information includes the tag identifier of the first tag on which a deactivation operation is to be performed and the tag identifier of the second tag corresponding to the non-deactivation operation, and the random access indication information indicates the RAN device to trigger random access of a tag within a first tag range. After the first tag accesses a network (for example, establishes a connection to the AMF network element) and sends the tag identifier to the AMF network element, the AMF network element may send the deactivation instruction to the first tag through downlink (downlink, DL) non-access stratum (non-access stratum, NAS) transport (transport) or the like, to instruct a deactivation operation to be performed on the first tag, to deactivate the first tag, for example, invalidate the first tag, so that the first tag no longer responds to a random access request or the like subsequently. Optionally, after a deactivation operation is performed on the first tag, the first tag may further send deactivation response information to the AMF network element through uplink (uplink, UL) NAS transport or the like, and the deactivation response information may carry information indicating whether the first tag is successfully deactivated. After sending the deactivation instruction to the first tag, the AMF network element may further delete the stored context of the first tag. In addition, after the second tag accesses the network (for example, a connection is established with the AMF network element) and sends the tag identifier to the AMF network element, the AMF network element may also send a non-deactivation instruction such as an inventory instruction to the second tag through the downlink (downlink, DL) NAS transport, and perform a non-deactivation operation such as read, write, and inventory on the second tag.

In addition, for the foregoing case in which the UDR/UDM network element maintains the life cycle of the tag, in a possible implementation, the UDR/UDM network element may start the life cycle of the tag after obtaining the subscription information such as the life cycle of the tag. For example, after the subscription information such as the life cycle of the tag is obtained, a validity timer and/or an operation counter of the tag are started. In another possible implementation, after receiving life cycle trigger information from the AMF network element, the UDR/UDM network element may further start a life cycle of a corresponding tag based on a tag identifier included in the life cycle trigger information. For example, the UDR/UDM network element may start the validity timer and/or the operation counter of the first tag based on the tag identifier of the first tag included in life cycle trigger information.

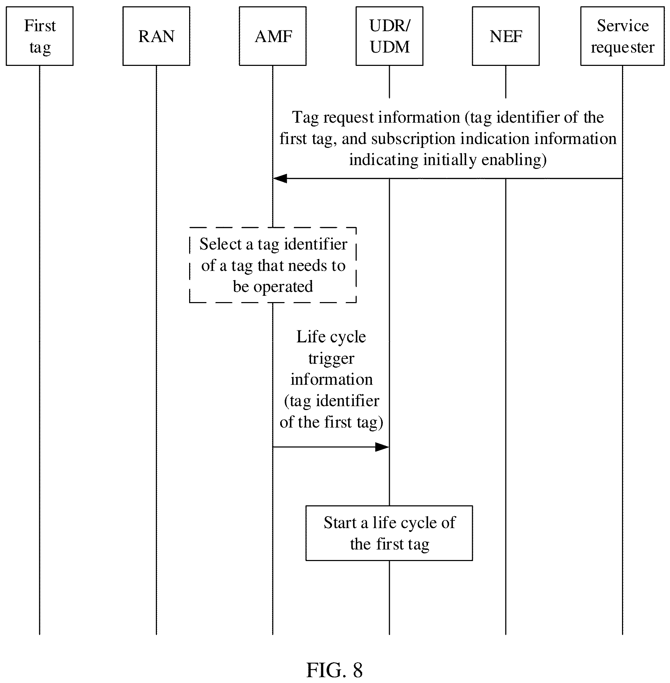

Implementation 1: As shown in FIG. 8, when the service requester needs to perform a non-deactivation operation such as inventory on the tag, the service requester may send the tag request information to the AMF network element by using the NEF network element, to request the AMF network element to perform a non-deactivation operation such as inventory on the tag. The tag request information may carry a tag identifier and an operation type of a tag that needs to be operated, and may further carry information such as an identifier of the service requester, subscription indication information, and a tag type. The subscription indication information may indicate whether the tag is initially enabled. For example, when an indication bit of the subscription indication information is 1, it indicates that the tag is initially enabled. When the indication bit is 0, it indicates that the tag is non-initially enabled. The AMF network element receives the tag request information from the service requester, and identifies that subscription indication information of a specific tag (for example, the first tag) included in the tag request information indicates that the tag (for example, the first tag) is initially enabled. The AMF network element sends life cycle trigger information to the UDR/UDM network element, and carries a tag identifier of the tag (for example, the first tag) in life cycle trigger information, to indicate the UDR/UDM network element to start a life cycle of the tag (for example, the first tag).

In an example, the tag request information sent by the service requester to the AMF network element may be shown in Table 3, including the tag identifier and the operation type of the tag that needs to be operated, and may further carry the information such as the identifier of the service requester, the subscription indication information, and the tag type. As shown in Table 3, the tag request information may include the tag identifier 0001 of the tag 1 that needs to be operated, the operation type being inventory, the tag type being passive, the identifier of the service requester being 1, and subscription indication information being 1 (indicating initially started); and the tag identifier 0002 of the tag 2 that needs to be operated, the corresponding operation type being inventory, the tag type being passive, the identifier of the service requester being 1, and subscription indication information being 0 (indicating non-initially started).

**Table 3**

| Tag identifier (Tag ID) | Operation type | Tag type | Identifier of a service requester | Subscription indication information |
|---|---|---|---|---|
| 0001 | Inventory | Passive | 1 | 1 (indicating initially enabled) |
| 0002 | Inventory | Passive | 1 | 0 (indicating non-initially enabled) |

In another example, the tag request information sent by the service requester to the AMF network element may alternatively be shown in Table 4, including the identifier range and the operation type of the tag that needs to be operated, and may further carry the information such as the identifier of the service requester, the subscription indication information, and the tag type. As shown in Table 4, the tag request information may include the tag identifier range being less than 0050, the operation type being inventory, the tag type being passive, the identifier of the service requester being 1, and subscription indication information being 1 (indicating initially enabled); and the tag identifier range being greater than 0100 and less than 0200, the corresponding operation type being read, the tag type being passive, the identifier of the service requester being 1, and subscription indication information being 0 (indicating non-initially enabled).

**Table 4**

| Tag identifier (Tag ID) | Operation type | Tag type | Identifier of a service requester | Subscription indication information |
|---|---|---|---|---|
| <0050 | Inventory | Passive | 1 | 1 |
| >0100 & <0200 | Read | Passive | 1 | 0 |

It should be understood that, in a case in which the tag request information includes only the tag identifier range, the AMF network element may select, based on the tag identifier range in the tag request information and the tag range corresponding to the service requester (the service requester may be determined based on the identifier of the service requester in the tag request information), the tag identifier of the tag that needs to be operated. The tag range corresponding to the service requester may be stored in the AMF network element, or may be stored in a network element such as the UDM/UDMR network element, and is obtained by the AMF network element from the network element such as the UDM/UDMR network element. This is not limited in this application.

For example, an identifier range of a tag corresponding to the service requester whose identifier is 1 is 0001-0002 and 0101-0102. In this case, after receiving the tag request information that carries the information shown in Table 4, the AMF network element may determine that an inventory operation needs to be performed on tags whose tag identifiers are 0001 and 0002, the tags whose tag identifiers are 0001 and 0002 are initially enabled, a read operation needs to be performed on tags whose tag identifiers are 0101 and 0102, and the tags whose tag identifiers are 0101 and 0102 are non-initially enabled.

Implementation 2: The tag request information may alternatively not carry tag subscription indication information of the tag.

When the service requester needs to perform a non-deactivation operation such as inventory on the tag, the service requester may send the tag request information to the AMF network element, to request the AMF network element to perform a non-deactivation operation such as inventory on the tag. A request tag may carry a tag identifier and an operation type of a tag that needs to be operated, and may further carry information such as an identifier of the service requester and a tag type. The AMF network element receives the tag request information from the service requester. If the AMF network element identifies that no operation is performed on a specific tag, for example, the AMF network element does not store an operation record of a specific tag (or a tag identifier), the AMF network element may also determine that the tag is initially enabled, and send life cycle trigger information to the UDR/UDM network element, the life cycle trigger information includes a tag identifier of the tag, to indicate the UDR/UDM network element to start a life cycle of the tag. After receiving the life cycle trigger information that includes the tag identifier and that is from the AMF network element, the UDR/UDM network element identifies whether a life cycle of a corresponding tag is started, and if the life cycle of the corresponding tag is not started, starts the life cycle of the tag.

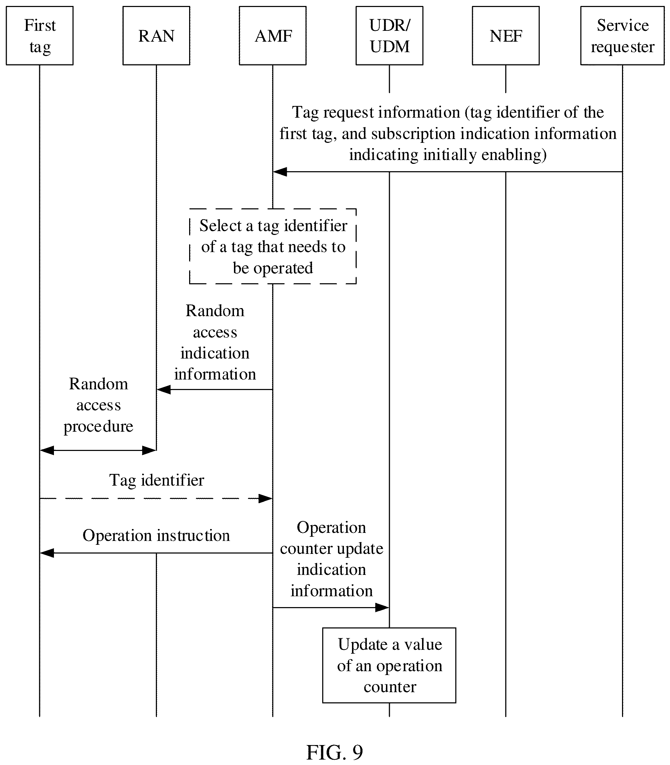

In addition, as shown in FIG. 9, after determining, based on the tag request information from the service requester, the tag identifier of the tag that needs to be operated, the AMF network element may send the random access indication information to the RAN device. The random access indication information may indicate a Select command that needs to be broadcast by the RAN device. A mask carried in the Select command includes information about the tag identifier of the tag that needs to be operated. After receiving the random access indication information, the RAN device may perform random access on the corresponding tag. After the tag accesses the network (for example, establishes a connection to the RAN device), the tag identifier of the tag may be further sent to the AMF network element. If the tag is a passive tag, the tag identifier of the tag may be sent to the AMF network element by using a registration request (registration request). If the tag is a semi-passive tag, the tag identifier may be sent to the AMF network element through NAS transport. After the tag accesses the network, the AMF network element may send an operation instruction such as inventory to the tag (for example, the first tag), to perform an operation on the tag.

In a case in which the UDR/UDM network element starts the life cycle of the tag by starting an operation counter corresponding to the tag, after performing any non-deactivation operation (for example, an operation such as inventory or read) on the tag (for example, the first tag), the AMF network element may further send, to the UDR/UDM network element, operation counter update indication information that includes the tag identifier of the tag (for example, the first tag), to indicate to reduce or increase a value of the operation counter corresponding to the tag (for example, the first tag) by 1, so that the UDR/UDM network element senses the update of the value of the operation counter of the tag, and maintains the life cycle of the tag.

Alternatively, when the UDR/UDM network element starts the life cycle of the tag by starting the operation counter corresponding to the tag, the AMF network element may alternatively maintain the operation counter corresponding to the tag. For example, when sending, to the UDR/UDM network element, the life cycle trigger information corresponding to the tag (the first tag), the AMF network element may start one operation counter corresponding to the tag (for example, the first tag). Alternatively, before performing an operation on a specific tag (for example, the first tag) for a specific time (for example, for the first time), the AMF network element may send, to the UDR/UDM network element, operation counter obtaining information including the tag identifier of the tag (for example, the first tag), receive operation counter value information that includes a value of the operation counter corresponding to the tag and that is from the UDR/UDM network element, and start, based on the value of the operation counter corresponding to the tag (for example, the first tag), one operation counter corresponding to the tag (for example, the first tag) in the AMF network element based on the value of the operation counter corresponding to the tag (for example, the tag). Operation counter.

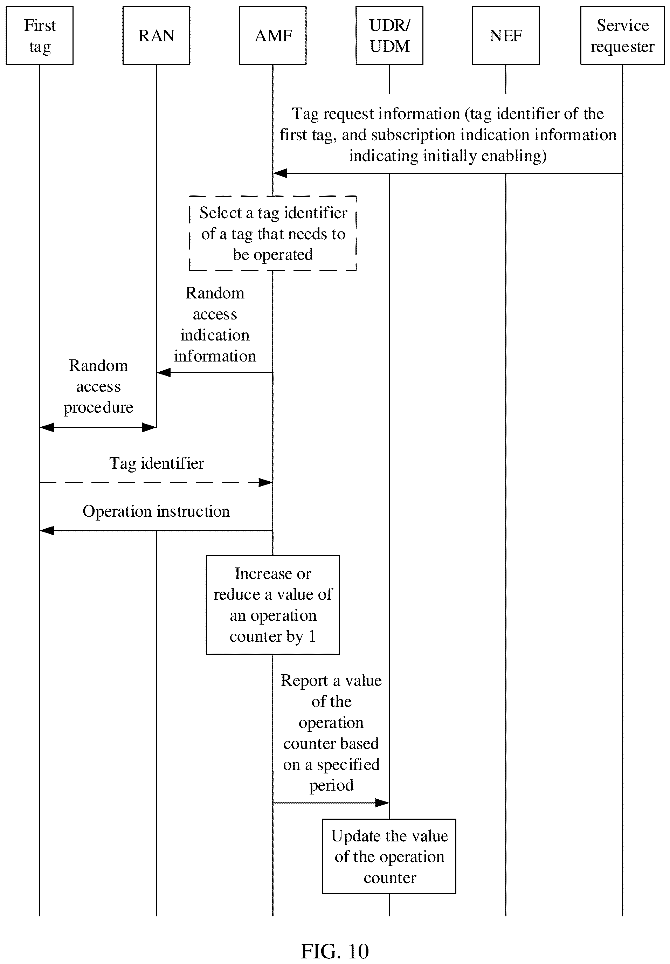

As shown in FIG. 10, after the operation counter corresponding to the tag (for example, the first tag) is started, the AMF network element reduces or increases, after performing any non-deactivation operation on the tag (for example, the first tag), a value of the maintained operation counter corresponding to the tag by 1. The AMF network element may alternatively send, to the UDR/UDM network element based on a specified period, a value of the operation counter corresponding to the tag (for example, the first tag), so that the UDR/UDM network element updates the value of the operation counter corresponding to the tag (for example, the first tag) maintained in the UDR/UDM network element. In addition, an accessed AMF network element may be switched during the life cycle of the tag. When the AMF network element accessed by the tag is switched or the like, the UDR/UDM network element may further send, to the AMF network element previously accessed by the tag (for example, the first tag), operation counter reporting information including the tag identifier of the tag (for example, the first tag). After the AMF network element receives, from the UDR/UDM network element, the operation counter reporting information including the tag identifier of the tag (for example, the first tag), or when the operation counter corresponding to the tag (for example, the first tag) is set to zero or the like, the AMF network element may further send the value of the operation counter corresponding to the tag (for example, the first tag) to the UDR/UDM network element, so that the UDR/UDM network element updates the value of the operation counter corresponding to the tag (for example, the first tag) maintained in the UDR/UDM network element.

As a quantity of operation times on the tag increases, the operation counter/the validity timer corresponding to the tag is continuously updated. When the operation counter starts from zero to exceeding the count threshold, or the validity timer starts from zero exceeding the validity time threshold, the UDR/UDM network element sends, to the AMF network element, a request for requesting to perform a deactivation operation on the tag. Certainly, when the operation counter starts from the count threshold to zero, or the validity timer starts from the validity time threshold to zero, the UDR/UDM network element may alternatively send, to the AMF network element, a request for requesting to perform a deactivation operation on the tag.

It should be understood that the accessed AMF network element may be switched during the life cycle of the tag. For example, for the first tag, an AMF network element accessed when the first tag is initially enabled, and an AMF network element accessed when the first tag is deactivated may be two different AMF network elements, for example, an AMF network element 1 and an AMF network element 2 respectively. Whether the AMF network element accessed during the life cycle of the tag is switched is not specifically limited in this application.

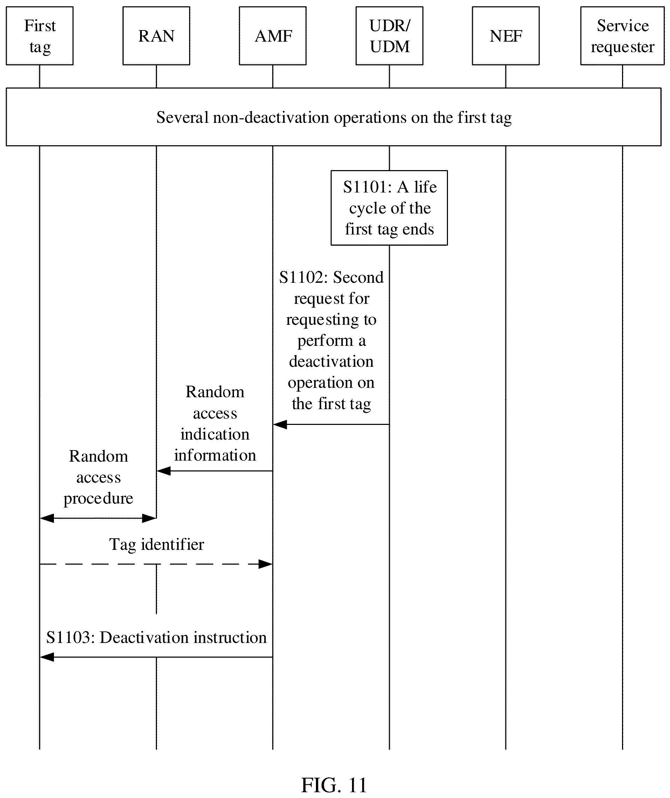

In addition, internet of things constructed based on RFID is generally deployed only in an enterprise, and does not involve charging for a tag operation. Different from this, in P-IoT, an internet of things technology is combined with a wireless communication system, and there is a problem that an operator of the wireless communication system charges for a tag operation. Therefore, to conform to an operation mode of the operator, a tag is deactivated in time, to avoid a problem that extra charging of the operator is generated due to untimely deactivation on the tag. In some implementations, the AMF network element may alternatively deactivate the first tag when receiving the second request that is from the UDR/UDM network element and that requests to deactivate the first tag. FIG. 11 is a diagram of another tag deactivation method according to an embodiment of this application. The method includes the following steps.

S1101: A UDR/UDM network element determines that a life cycle of a first tag ends.

S1102: The UDR/UDM network element sends a second request to an AMF network element, and correspondingly, the AMF network element receives the second request, where the second request is used to request to perform a deactivation operation on the first tag.

S1103: The AMF network element sends a deactivation instruction to the first tag.

Refer to FIG. 11. After a UDR/UDM network element performs non-deactivation operations on the first tag for several times and determines that the life cycle of the first tag ends, the UDR/UDM network element may send, to the AMF network element, the second request for requesting to perform a deactivation operation on the first tag. After receiving the second request from the UDR/UDM network element, the AMF network element may send random access indication information including a first tag identifier to a RAN device, to indicate the RAN device to perform random access to the first tag, and after the first tag accesses a network (for example, establishes a connection to the AMF network element) and sends the tag identifier to the AMF network element, the AMF network element may send the deactivation instruction to the first tag through DL NAS transport or the like, to instruct to perform a deactivation operation on the first tag, so that the first tag is deactivated, for example, the first tag no longer responds to a random access request subsequently. Optionally, after a deactivation operation is performed on the first tag, the first tag may further send deactivation response information to the AMF network element through the UL NAS transport or the like, and the deactivation response information may carry information indicating whether the first tag is successfully deactivated. Alternatively, after receiving the second request, the AMF network element may alternatively store/record information indicating that a second tag is to be deactivated, and perform an operation together after an arrival of a subsequent non-deactivation request.

It may be understood that, to implement functions in the foregoing embodiments, a core network device (for example, the AMF network element) includes corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a specific function is performed by hardware or hardware driven by computer software depends on particular application scenarios and design constraint conditions of the technical solutions.

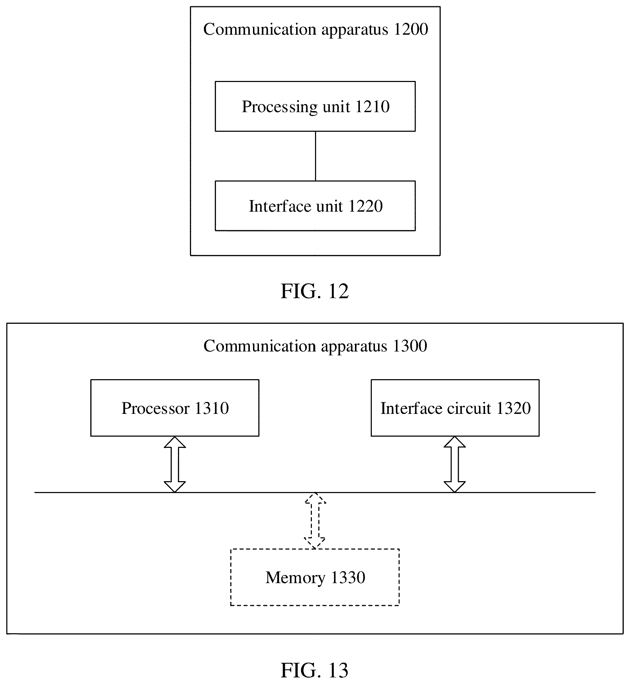

FIG. 12 and FIG. 13 are diagrams of structures of possible communication apparatuses according to embodiments of this application. These communication apparatuses may be configured to implement a function of the core network device in the foregoing method embodiments. Therefore, beneficial effects of the foregoing method embodiments can also be implemented. In a possible implementation, the communication apparatus may be a core network device, or may be a module (for example, a chip) used in a core network device.

As shown in FIG. 12, a communication apparatus 1200 includes a processing unit 1210 and an interface unit 1220. The interface unit 1220 may alternatively be a transceiver unit or an input/output interface. The communication apparatus 1200 may be configured to implement a function of the core network device (for example, the AMF network element) in the method embodiment shown in FIG. 5.

When the communication apparatus 1200 is configured to implement the function of the core network device in the method embodiment shown in FIG. 5,
the interface unit 1220 is configured to receive a first request from a service requester, where the first request is used to request to perform a non-deactivation operation on a second tag;
the processing unit 1210 is configured to determine that there is a first tag on which a deactivation operation is to be performed, where the deactivation operation is used to deactivate the first tag; and
the interface unit 1220 is further configured to: send random access indication information to an access network device, where the random access indication information includes a first tag identifier range, the random access indication information indicates an access network device to trigger random access of a tag within the first tag identifier range, and the first tag identifier range includes a tag identifier of the first tag and a tag identifier of the second tag; and send a deactivation instruction to the first tag after random access of the first tag.

In a possible design, the interface unit 1220 is further configured to: receive a second request from a data management function network element, where the second request is used to request to perform a deactivation operation on the first tag, and the second request is sent by the data management function network element after a life cycle of the first tag ends; or receive a second request from the service requester, where the second request is used to request to perform a deactivation operation on the first tag. The processing unit 1210 is further configured to store the first tag on which a deactivation operation is to be performed.

In a possible design, the interface unit 1220 is further configured to: receive a third request from the service requester, where the third request is used to request to perform a non-deactivation operation on the first tag; and send life cycle trigger information to the data management function network element when the processing unit 1210 determines that no operation is performed on the first tag; or send life cycle trigger information to the data management function network element when the third request further carries subscription indication information indicating that the first tag is initially enabled, where the life cycle trigger information includes the tag identifier of the first tag and, to indicate the data management function network element to start the life cycle of the first tag.

In a possible design, starting the life cycle of the first tag includes starting a validity timer corresponding to the first tag and/or starting an operation counter corresponding to the first tag; and that the life cycle of the first tag ends includes: setting the validity timer corresponding to the first tag to zero or exceeding a validity time threshold, or setting the operation counter corresponding to the first tag to zero or exceeding a count threshold.

In a possible design, the interface unit 1220 is further configured to: when starting the life cycle of the first tag includes starting the operation counter corresponding to the first tag, send operation counter update indication information to the data management function network element after performing any non-deactivation operation on the first tag, where the operation counter update indication information includes the tag identifier of the first tag, to indicate to reduce or increase a value of the operation counter corresponding to the first tag by 1.

In a possible design, the processing unit 1210 is further configured to: determine, when it is detected that a behavior exception occurs on the first tag, that a deactivation operation is to be performed on the first tag; and store the first tag on which a deactivation operation is to be performed. Optionally, the behavior exception includes at least one of an access location exception and an access response exception.

As shown in FIG. 13, this application further provides a communication apparatus 1300, including a processor 1310 and an interface circuit 1320. The processor 1310 and the interface circuit 1320 are coupled to each other. It may be understood that the interface circuit 1320 may be a transceiver, an input/output interface, an input interface, an output interface, a communication interface, or the like. Optionally, the communication apparatus 1300 may further include a memory 1330 that is configured to: store instructions executed by the processor 1310, store input data required by the processor 1310 to run instructions, or store data generated after the processor 1310 runs instructions. Optionally, the memory 1330 may alternatively be integrated with the processor 1310.

When the communication apparatus 1300 is configured to implement the method shown in FIG. 5, the processor 1310 may be configured to implement a function of the processing unit 1210, and the interface circuit 1320 may be configured to implement a function of the interface unit 1220.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be disposed in an ASIC. In addition, the ASIC may be located in an access network device. Certainly, the processor and the storage medium may alternatively exist in the access network device as discrete components.

All or some of the foregoing embodiments may be implemented by software, hardware, firmware, or any combination thereof. When the software is used to implement embodiments, all or some of embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, an access network device, or another programmable apparatus. The computer program or the instructions may be stored in a computer-readable storage medium, or may be transmitted from a computer-readable storage medium to another computer-readable storage medium. For example, the computer program or the instructions may be transmitted from an access network device, a computer, server, or data center to another access network device, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid state drive. The computer-readable storage medium may be a volatile or nonvolatile storage medium, or may include two types of storage media: a volatile storage medium and a nonvolatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that, in embodiments of this application, the term "example" indicates giving an example, an illustration, or a description. Any embodiment or design scheme described as an "example" in this application should not be explained as being more preferred or having more advantages than another embodiment or design scheme. To be precise, the term "example" is intended to present a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A tag deactivation method, comprising:
receiving, by a core network device, a first request from a service requester, wherein the first request is used to request to perform a non-deactivation operation on a second tag;
determining, by the core network device, that there is a first tag on which a deactivation operation is to be performed, wherein the deactivation operation is used to deactivate the first tag;
sending, by the core network device, random access indication information to an access network device, wherein the random access indication information comprises a first tag identifier range, the random access indication information indicates the access network device to trigger random access of a tag within the first tag identifier range, and the first tag identifier range comprises a tag identifier of the first tag and a tag identifier of the second tag; and
sending, by the core network device, a deactivation instruction to the first tag after random access of the first tag.

2. The method according to claim 1, wherein the method further comprises:
receiving, by the core network device, a second request from a data management function network element, wherein the second request is used to request to perform a deactivation operation on the first tag, and the second request is sent by the data management function network element after a life cycle of the first tag ends; or
receiving, by the core network device, a second request from the service requester, wherein the second request is used to request to perform a deactivation operation on the first tag; and
storing, by the core network device, the first tag on which a deactivation operation is to be performed.

3. The method according to claim 2, wherein the method further comprises:
receiving, by the core network device, a third request from the service requester, wherein the third request is used to request to perform a non-deactivation operation on the first tag; and
sending, by the core network device, life cycle trigger information to the data management function network element when the core network device determines that no operation is performed on the first tag; or
sending, by the core network device, life cycle trigger information to the data management function network element when the third request further carries subscription indication information indicating that the first tag is initially enabled, wherein
the life cycle trigger information comprises the tag identifier of the first tag, to indicate the data management function network element to start the life cycle of the first tag.

4. The method according to claim 1, wherein the method further comprises:
determining, by the core network device when it is detected that a behavior exception occurs on the first tag, that a deactivation operation is to be performed on the first tag; and
storing, by the core network device, the first tag on which a deactivation operation is to be performed.

5. The method according to claim 4, wherein the behavior exception comprises at least one of an access location exception and an access response exception.

6. A communication apparatus, comprising an interface unit and a processing unit, wherein the interface unit is configured to receive a first request from a service requester, wherein the first request is used to request to perform a non-deactivation operation on a second tag;
the processing unit is configured to determine that there is a first tag on which a deactivation operation is to be performed, wherein the deactivation operation is used to deactivate the first tag; and
the interface unit is further configured to: send random access indication information to an access network device, wherein the random access indication information comprises a first tag identifier range, the random access indication information indicates the access network device to trigger random access of a tag within the first tag identifier range, and the first tag identifier range comprises a tag identifier of the first tag and a tag identifier of the second tag; and send a deactivation instruction to the first tag after random access of the first tag.

7. The apparatus according to claim 6, wherein the interface unit is further configured to: receive a second request from a data management function network element, wherein the second request is used to request to perform a deactivation operation on the first tag, and the second request is sent by the data management function network element after a life cycle of the first tag ends; or receive a second request from the service requester, wherein the second request is used to request to perform a deactivation operation on the first tag; and
the processing unit is further configured to store the first tag on which a deactivation operation is to be performed.

8. The apparatus according to claim 7, wherein the interface unit is further configured to: receive a third request from the service requester, wherein the third request is used to request to perform a non-deactivation operation on the first tag; and send life cycle trigger information to the data management function network element when the processing unit determines that no operation is performed on the first tag; or send life cycle trigger information to the data management function network element when the third request further carries subscription indication information indicating that the first tag is initially enabled, wherein the life cycle trigger information comprises the tag identifier of the first tag, to indicate the data management function network element to start the life cycle of the first tag.

9. The apparatus according to claim 6, wherein the processing unit is further configured to: determine, when it is detected that a behavior exception occurs on the first tag, that a deactivation operation is to be performed on the first tag; and store the first tag on which a deactivation operation is to be performed.

10. The apparatus according to claim 9, wherein the behavior exception comprises at least one of an access location exception and an access response exception.

11. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 5 by using a logic circuit or executing instructions.

12. A computer program product, comprising instructions, wherein when the instructions are executed by a processor, the method according to any one of claims 1 to 5 is implemented.

13. A chip system, wherein the chip system comprises:
a processor and a memory, wherein the processor is coupled to the memory, the memory is configured to store a program or instructions, and when the program or the instructions are executed by the processor, the method according to any one of claims 1 to 5 is implemented.

14. A computer-readable storage medium, wherein the storage medium stores a computer program or instructions, and when the computer program or the instructions are executed by a processor, the method according to any one of claims 1 to 5 is implemented.
